# EUROPÄISCHE PATENTSCHRIFT

(11) **EP 3 810 907 B1**
(45) Veröffentlichungstag und Bekanntmachung des Hinweises auf die Patenterteilung: **22.06.2022**
(21) Anmeldenummer: 19769058.9
(22) Anmeldetag: 30.08.2019
(51) Int. Cl.: F01K 23/10, F22B 1/18

(54) **ABGASREZIRKULATION IN GAS- UND DAMPFTURBINENANLAGEN**
EXHAUST GAS RECIRCULATION IN GAS AND STEAM TURBINES PLANTS
RECIRCULATION DES GAZ D'ÉCHAPPEMENT DANS DES INSTALLATIONS DE TURBINES À GAZ ET À VAPEUR

(30) Priorität: 07.09.2018 EP 18193230
(43) Veröffentlichungstag der Anmeldung: 28.04.2021
(73) Patentinhaber: Siemens Energy Global GmbH & Co. KG, 81739 München (DE)
(72) Erfinder: MIGL, Matthias, 80997 München (DE); TSCHETSCHIK, Denis, 91088 Bubenreuth (DE)
(86) Internationale Anmeldenummer: PCT/EP2019/073189
(87) Internationale Veröffentlichungsnummer: WO 2020/048882

(56) Entgegenhaltungen:
- US-A- 3 204 407
- US-A1- 2006 162 315
- US-A1- 2006 272 334
- US-A1- 2008 076 080
- US-A1- 2016 040 558

## Beschreibung

Die Erfindung betrifft eine Abgasrezirkulation zur Verringerung des Lebensdauerverbrauches von Abhitzedampferzeugern und zur Verringerung von Emissionen sowie zur Erhöhung der Effizienz moderner Gas- und Dampfturbinenanlagen bei instationären Vorgängen.

Für das emissionsarme und lebensdauerschonende Anfahren moderner Gas- und Dampfturbinenanlagen sowie bei anderen instationären Vorgängen wird der Abhitzedampferzeuger (AHDE) momentan an bestimmten Teillastpunkten zum Anwärmen gehalten. Das verlängert zum einen die Anfahrtszeit der Kraftwerke und führt somit zu hohem Brennstoffverbrauch bei niedriger Effizienz der Energieerzeugung und zum anderen wird die Gasturbine dadurch lange Zeit in einem hohen Emissionslevel (Kohlenmonoxid) gefahren.

Der Abhitzedampferzeuger benötigt einfach eine gewisse Zeit (>15 Minuten), um ausreichend hohe Temperaturen in den Druckstufen und vor einem evtl. in der Anlage angeordneten Kohlenmonoxid-Katalysator zu erreichen.

EP 3011144 A2 offenbart eine Lösung für das genannte Problem, bei der in die Anströmhaube des Abhitzedampferzeugers Wasser /Deionat eingedüst wird, wobei eine Rauchgastemperatur durch die Verdampfung des eingedüsten Wassers/Deionats verringert wird. Ein Nachteil dieses Systems ist der zusätzliche Deionat-/Wasserverbrauch. Ein weiterer Nachteil ist die deutliche Absenkung der Effizienz der Kraftwerksanlage (massive Senkung der Rauchgasenthalpie bei moderater Erhöhung des Abgasmassenstroms) sowie die Erhöhung des abgasseitigen Druckverlustes.

Eine alternative Lösung hierzu ist die Eindüsung kalter Zusatzluft in die Anströmhaube des Abhitzedampferzeugers. Der Nachteil dieser Lösung ist, dass alle Druckstufen des Abhitzedampferzeugers beeinflusst werden, was zu einer möglichen Überlastung des Mitteldruck- und des Niederdruckteils des Abhitzedampferzeugers führen kann. Ein weiterer Nachteil ist, wie auch schon bei der ersten Lösung, der Effizienzverlust der Kraftwerksanlage. Außerdem wird der abgasseitige Druckverlust ansteigen und möglicherweise die Designwerte erreichen.

Verfahren, welche mit einer Absenkung der Gasturbinen-Abgastemperatur (ATK) arbeiten, führen zu massiven Leistungs- und Effizienzeinbußen, sowie zu einer höheren CO-Fracht beim Anfahren.

Neben der Regelung der Abgastemperatur ist auch die Dampftemperaturregelung im Abhitzedampferzeuger mittels Einspritzkühler im Zusammenspiel mit der Abgastemperatur im Hinblick auf die Kraftwerksanlageneffizienz sowie die Kessellebensdauer problematisch.

Die US 2006/0162315 A1 offenbart eine Kraftwerksanlage, bei der ein Teil des Abgases an einem Punkt des Abhitzedampferzeugers entnommen und zu dessen Eingang rezirkuliert wird. Aufgabe der Erfindung ist es, eine Kraftwerksanlage bereitzustellen, die ein möglichst emissionsarmes und lebensdauerschonendes Anfahren ermöglicht und bei der ein gegenüber den Anlagen aus dem Stand der Technik verbesserter Wärmeübergang zwischen Abgas und Heizflächen im Abhitzedampferzeuger möglich ist. Eine weitere Aufgabe der Erfindung ist es, ein entsprechendes Verfahren zum Betrieb einer solchen Kraftwerksanlage anzugeben.

Die Erfindung welche in Anspruch 1 definiert ist löst die auf eine Kraftwerksanlage gerichtete Aufgabe, indem sie vorsieht, dass bei einer derartigen Kraftwerksanlage mit einer Gasturbine und mit einem der Gasturbine in Strömungsrichtung eines Abgases nachgeschalteten Abhitzedampferzeuger, wobei der Abhitzedampferzeuger Heizflächen eines Hochdruckteils, eines Mitteldruckteils und eines Niederdruckteils umfasst, wobei eine Abgasrezirkulationsleitung in Strömungsrichtung eines Abgases stromab eines Verdampfers des Hochdruckteils vom Abhitzedampferzeuger abzweigt und vor den Heizflächen wieder in den Abhitzedampferzeuger mündet, wobei ein Gebläse in der Abgasrezirkulationsleitung angeordnet ist, in Strömungsrichtung eines rezirkulierten Abgases hinter dem Gebläse eine Dampfzuführung in die Abgasrezirkulationsleitung mündet.

Um die oben genannten negativen Auswirkungen (sowie den Exergieverlust durch Dampfeinspritzungen im Hochdruckteil und im Bereich der Zwischenüberhitzung) zu minimieren, wird eine Abgasrezirkulation im Abhitzedampferzeuger mit Dampfzumischung vorgeschlagen. Die Gasturbinenabgase werden bereits deutlich vor dem Abhitzedampferzeugeraustritt zumindest zum Teil zum Abhitzedampferzeugereintritt rückgeführt. Dabei findet eine Vermischung des rezirkulierenden Abgases (bis zu ca. 400°C) mit dem Abgas der Gasturbine statt. Ein in der Abgasrezirkulationsleitung angeordnetes Gebläse kompensiert (ggf. überkompensiert) den vergleichsweise geringen Druckunterschied zwischen Abgasentnahme und Abgaszugabe am Abhitzedampferzeuger. Eine Dampfzuführung mündet in Strömungsrichtung eines rezirkulierten Abgases hinter dem Gebläse in die Abgasrezirkulationsleitung. Durch eine Zumischung von Dampf zum Abgas verbessert sich der Wärmeübergang des Abgases an den nachfolgenden Heizflächen im Abhitzedampferzeuger.

Dabei ist es zweckmäßig, wenn die Kraftwerksanlage eine Anströmhaube umfasst, über welche im Betrieb nachfolgenden Heizflächen Abgas zugeführt wird, wobei die Abgasrezirkulationsleitung in die Anströmhaube mündet.

Ferner ist es vorteilhaft, wenn eine Regelklappe in der Rezirkulationsleitung angeordnet ist. Mit der Regelklappe lässt sich ein definierter rezirkulierter Abgasmassenstrom einstellen, ferner kann die Regelklappe die Kompensation des Druckabfalls im Abhitzedampferzeuger gewährleisten.

Dabei ist es zweckmäßig, wenn die Dampfzuführung von einem Kesselwasserentspanner abzweigt, der bei der Abschlämmung (An- und Abfahrvorgange) und Entleerung von Dampferzeugern dazu verwendet wird, das abgeschlämmte Wasser durch Entspannung teilweise zu verdampfen. Der dabei entstehende Dampf wird oft verworfen, kann aber auch energetisch nutzbringend den rezirkulierten Abgasen zugemischt werden.

Ferner ist es vorteilhaft, wenn die Kraftwerksanlage mindestens zwei Abgasrezirkulationsleitungen umfasst, die im Wesentlichen symmetrisch angeordnet in die Anströmhaube münden. Eine solche Anordnung führt zu einer homogenen Durchmischung der rezirkulierten Abgase mit den direkt von der Gasturbine kommenden und in den Abhitzedampferzeuger geleiteten Abgase. Die auf ein Verfahren gerichtete Aufgabe wird gelöst durch ein Verfahren zum Betreiben einer Kraftwerksanlage nach Anspruch 6 mit einer Gasturbine und einem Abhitzedampferzeuger, wobei der Abhitzedampferzeuger Heizflächen eines Hochdruckteils, eines Mitteldruckteils und eines Niederdruckteils umfasst, wobei Gasturbinenabgase nach einem Verdampfer des Hochdruckteils abgezweigt und vor den Heizflächen wieder in den Abhitzedampferzeuger eingeleitet werden, wobei Dampf in das rezirkulierte Abgas gemischt wird.

Dabei kann es zweckmäßig sein, wenn der zugemischte Dampf zuvor einem Kesselwasserentspanner entnommen wird.

Es ist vorteilhaft, wenn die Gasturbinenabgase nach einem Hochdruckvorwärmer im Abhitzedampferzeuger abgezweigt werden. Eine Abzweigung kann dabei unmittelbar nach einem Hochdruckvorwärmer, aber auch weiter stromab erfolgen, beispielsweise unmittelbar nach einem Mitteldruckverdampfer oder einem Mitteldruckvorwärmer.

Weiter ist es vorteilhaft, wenn zu rezirkulierende Gasturbinenabgase mittels eines Gebläses erfasst und wieder in den Abhitzedampferzeuger eingeleitet werden.

Ferner ist es zweckmäßig, wenn eine rezirkulierte Abgasmenge über eine Regelklappe eingestellt wird.

Um eine über den Umfang möglichst gleichmäßige Zugabe rezirkulierten Abgases in den Abgasstrom der Gasturbine sicher zu stellen, ist es zweckmäßig, wenn rezirkuliertes Abgas an gegenüberliegenden Positionen eines Umfangs dem Abhitzedampferzeuger zugeführt wird.

Schließlich ist es vorteilhaft, wenn zumindest ein Teil eines heißen Gasturbinenabgases mittels einer Abgasweiche vom Hauptmassenstrom des Abgases abgetrennt und dem Abhitzedampferzeuger zugeführt wird und dort mit rezirkuliertem Abgas gemischt wird, so dass die Kraftwerksanlage leistungsgeführt angefahren werden kann und nicht wie vorher über ein temperaturgeführtes Verfahren. Die Gasturbine muss nicht in Ihrer Last reduziert werden, bzw. vom Netz, wodurch keine zweite Fahrkurve für die Gasturbine notwendig wird.

Bei dem erfindungsgemäßen Verfahren sind kesselspezifische Anforderungen an das Abgasprofil (Geschwindigkeit, Temperatur, Temperaturverteilung) für den stabilen Betrieb des Abhitzedampferzeugers einzuhalten. Durch eine Variation der Abgasrezirkulationsmenge und der Abgasfeuchte kann die für den Hochdruckteil benötigte absolute Abgasmischtemperatur, sowie der Temperaturtransient eingestellt werden, welche zum geringsten Lebensdauerverbrauch führen werden.

Außerdem wird durch die Erhöhung des Abgasmassenstroms durch den Hochdruckteil des Abhitzedampferzeugers und dessen Feuchte erreicht, dass der Abhitzedampferzeuger (vor allem der Hochdruckverdampfer) schneller angewärmt wird und schneller als heute mehr Dampf produziert wird. Die Beschleunigung des Anwärmens wird sich auch positiv auf die Absorption eines möglichen CO-Katalysators auswirken. Statt der heute üblichen 15 bis 25 Minuten für eine Durchwärmung des Hochdruckteils werden nun 5 bis 7 Minuten bei einem Kesselkaltstart erwartet. Für Warm- und Heißstart werden sich die bisherigen Zeiten auch mehr als halbieren. Die schnellere Durchwärmung hat zeitliche Vorteile bei der CO-Frachtenregelung (Emissionen) beim Anfahren der Gasturbine bzw. des Abhitzedampferzeugers, vor allem in den USA.

Ein weiterer positiver Effekt ist die Unabhängigkeit von der Abgastemperatur der Gasturbine. Insbesondere bei der wegen der CO-Problematik mit der Teillast einhergehenden notwendigen Erhöhung der Gasturbinenabgastemperatur mussten bisher die Hochdruck-/Zwischenüberhitzerzwischeneinspritzkühler die Temperatur des Dampfes reduzieren, damit Designvorgaben nicht gefährdet wurden. Der Wegfall dieser Maßnahme führt zur weiteren Erhöhung der Effizienz der Anlage in Teillast.

Weitere positive Effekte werden durch die wesentliche Erhöhung des Betriebsbereiches der Anlage, vor allem für Kraftwerke mit großer Prozessdampfmengenauskopplung gesehen. Die Rezirkulation des Abgases hilft bei sinkender Leistung der Gasturbine die Dampfproduktion im Abhitzedampferzeuger aufrechtzuerhalten.

Falls bei zukünftiger Entwicklung der Gasturbine die Abgastemperatur stark ansteigen soll (z.B. > 700°C) könnte die Rezirkulation zum Einsatz kommen, um die Kesseleintrittstemperatur wieder zu senken. Somit kann vermieden werden, dass die bei sehr hohen Dampftemperaturen notwendigen Werkstoffe (Ni-Alloys) verwendet werden müssen, was zu einer massiven Kosteneinsparung führt.

Die bisherige Temperaturgradientenregelung wird nun durch diese vorgeschlagene Abgasrezirkulation übernommen.

Die Erfindung bietet zahlreiche Vorteile. Die Effizienz der Anlage in Teillasten wird bis 0,55-0,60%-Punkte Nettogesamtwirkungsgrad (GUD) dadurch erhöht, dass während der dynamischen und statischen Vorgänge Hochdruck-/Zwischenüberhitzereinspritzkühler nicht gebraucht werden. Die Einspritzkühler (vor allem Zwischeneinspritzkühler) sind dann nur noch als Noteinspritzer zu betrachten. Dabei können sie gegebenenfalls kleiner ausgelegt werden.

Die Erfindung bewirkt eine GuD-Gesamtwirkungsgraderhöhung bei Mindestlasten und beim Anfahren der GuD-Anlage sowie bessere Mindestlastemissionen, vor allem im Hinblick auf Kohlenmonoxid. Bei Gasturbinen-Mindestlasten wird üblicherweise eine Teillastabgastemperaturüberhöhung zur CO-Reduzierung eingebaut, um die Kohlenmonoxid-Emissionen besser zu reduzieren.

Der Betriebsbereich der Kraftwerksanlage vergrößert sich nicht nur bei reinem Kondensationsbetrieb aufgrund der nun verringerten CO-Problematik, sondern auch für Kraftwerke mit größeren Prozessdampfauskopplungsmengen. Prozessdampf wird üblicherweise im Bereich der kalten Zwischenüberhitzung entnommen. Dieser Dampf "fehlt" dann aber bei entsprechender Beaufschlagung der Zwischenüberhitzerheizflächen mit dem heißen Gasturbinenabgas. Die Auskopplung von Prozessdampf ist im Industriegeschäft üblich. Auch große GuD-Kraftwerke bedienen zum Teil große Dampfauskopplungsmengen.

Ein weiterer Vorteil ist es, dass die für den Hochdruckteil erforderliche Abgasmenge bei sehr niedrigen Leistungen der Gasturbine und hohen Abgastemperaturen, die eine stabile Verdampfung sicherstellt, durch die Abgasrezirkulation positiv beeinflusst wird, da die Dampfproduktion im unteren Lastbereich der Gasturbine nicht stark abnimmt, obwohl die Gasturbinenabgasmenge sinkt (sogenannter "extended Turn Down"-Betrieb der Gasturbinen).

Die Gasturbine kann mit der Erfindung ohne wesentliche Erhöhung des Lebensdauerverbrauches an den druckführenden Bauteilen des Dampferzeugers beliebig schnell hochgefahren werden und muss keine Haltepunkte einhalten, da der Temperaturtransient für den Abhitzedampferzeuger über die Rezirkulation einstellbar ist.

Somit ergibt sich eine Änderung der Fahrweise der rotierenden Energiemaschinen (Dampf-/Gasturbinen) ohne wesentliche Erhöhung des Lebensdauerverbrauches an den druckführenden Bauteilen des Dampferzeugers.

Durch die Erhöhung des Abgasmassenstroms und dessen Feuchte in bestimmten Bereichen des Abhitzedampferzeugers ergeben sich verringerte Kesseldurchwärmzeiten (vor allem bei Kaltstart). Daher wird eine erste Dampfproduktion schneller als üblich erzielt. Auch die notwendigen Betriebstemperaturen von CO- + SCR-Katalysatoren werden schneller erreicht. Ein Durchwärmen eines möglichen CO-Katalysators, für eine Reduzierung der CO-Emissionen bei Frachtenregelung ist schon während des Anfahrens möglich (CO-Katalysator platziert vor oder hinter Hochdruck-Verdampfer, je nach Temperaturfenster). Dies ist vor allem für US-Anlagen, bei denen die CO-Frachtenregelung schon eingeführt wurde, interessant.

Dadurch, dass die Materialerschöpfung verringert wird, kann ein Kesselaufbau (Hardware) kostengünstiger erfolgen.

Da der (erste) produzierte Dampf kälter als üblich ist, wird auch vor allem beim Kaltstart ein Dampfturbinenanwärmen unterstützt.

Unabhängig vom Gasturbinentyp ist aufgrund der Einstellbarkeit der Abgastemperatur im Bereich des Abhitzedampferzeugers ein "heißes Belüften" möglich, wenn eine Abgasweiche (Diverter Damper) vorhanden ist. Mit der Abgasweiche wird ein Teil des heißen Gasturbinenabgases abgezweigt und dem Abhitzedampferzeuger zugeführt und dort mit dem rezirkulierten Abgas gemischt, so dass sich Abgastemperatur und -menge einstellen lassen.

Die vorgeschlagene Lösung ist für alte Abhitzedampferzeuger/Kraftwerke nachrüstbar, die eine neue effizientere Gasturbine vorangestellt bekommen.

Ferner ist die Erfindung für alle Kesseltypen wie z.B. Abscheider (Benson), Trommeln, und diversen Verdampfertypen (stehend, liegend etc.) einsetzbar.

Die Erfindung wird beispielhaft anhand einer Zeichnung näher erläutert.

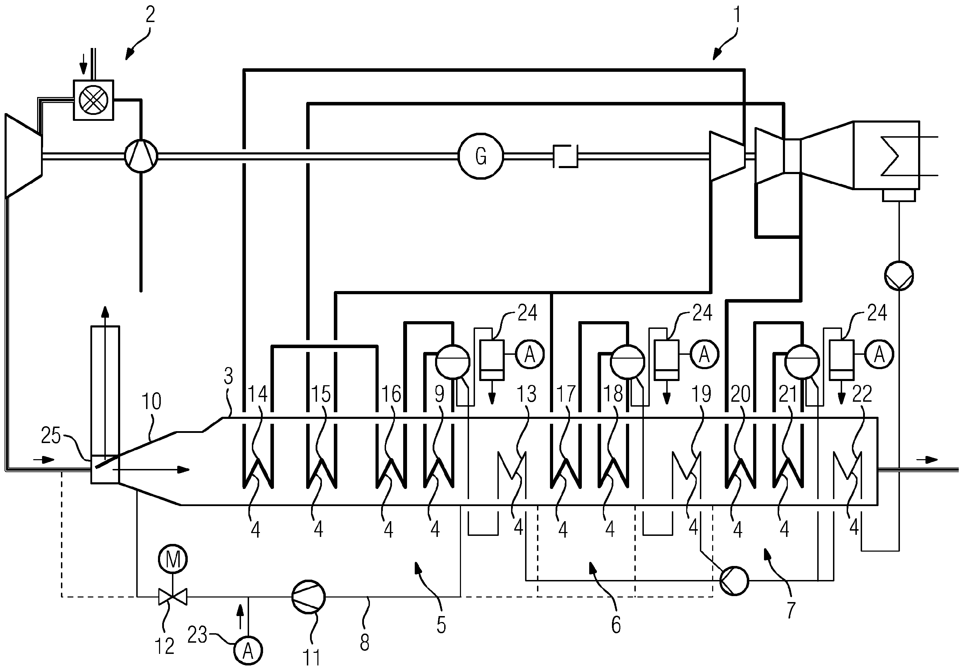

Die Figur zeigt schematisch und beispielhaft eine Kraftwerksanlage 1 mit einer Gasturbine 2 und mit einem der Gasturbine 2 in Strömungsrichtung eines Abgases nachgeschalteten Abhitzedampferzeuger 3, wobei der Abhitzedampferzeuger 3 eine Anströmhaube 10 umfasst, über welche im Betrieb nachfolgenden Heizflächen 4 Abgas der Gasturbine 2 zugeführt wird. Außerdem weist die Kraftwerksanlage 1 der Figur noch eine Abgasweiche 25 auf, mit der Gasturbinenabgase bei Bedarf auf den Abhitzedampferzeuger 3 oder von ihm weggelenkt werden können.

In Strömungsrichtung des Abgases zeigt die Figur im Abhitzedampferzeuger 3 einen zweiten Hochdrucküberhitzer 14, einen Zwischenüberhitzer 15, einen ersten Hochdrucküberhitzer 16, einen Hochdruckverdampfer 9, einen Hochdruckvorwärmer 13, einen Mitteldrucküberhitzer 17, einen Mitteldruckverdampfer 18, einen Mitteldruckvorwärmer 19, einen Niederdrucküberhitzer 20, einen Niederdruckverdampfer 21 und einen Kondensatvorwärmer 22.

Die Heizflächen 4 lassen sich also in drei Gruppen zusammenfasen, einen Hochdruckteil 5, einen Mitteldruckteil 6 und einen Niederdruckteil 7.

Im Ausführungsbeispiel der Figur zweigt in Strömungsrichtung eines Abgases eine Abgasrezirkulationsleitung 8 unmittelbar stromab des Verdampfers 9 des Hochdruckteils 5 vom Abhitzedampferzeuger 3 ab und mündet vor den Heizflächen 4 wieder in den Abhitzedampferzeuger 3. Bei Abhitzedampferzeugern mit Abgasweiche 25 liegt die Mündung der Abgasrezirkulationsleitung 8 vor der Abgasweiche 25. Bei Anlagen ohne Abgasweiche 25 kann das rezirkulierte Abgas direkt in die Anströmhaube 10 münden (gestrichelte Linie).

Alternativ zur mit der durchgezogenen Linie gezeigten Lösung zweigt die Abgasrezirkulationsleitung 8 weiter stromab entweder unmittelbar hinter dem Hochdruckspeisewasservorwärmer 13 oder hinter dem Mitteldruckverdampfer 18 oder auch hinter dem Mitteldruckvorwärmer 19 vom Abhitzedampferzeuger 3 ab (gestrichelte Linien).

In der Figur ist zwar nur eine einzige Abgasrezirkulationsleitung 8 gezeigt. Eine bevorzugte Ausführungsform wird aus Gründen einer besseren Durchmischung von rezirkuliertem Abgas und dem Abgas aus der Gasturbine zumindest noch eine zweite Abgasrezirkulationsleitung 8 aufweisen.

In der Abgasrezirkulationsleitung 8 sind ein Gebläse 11 und eine Regelklappe 12 angeordnet.

Ferner ist im Ausführungsbeispiel der Figur eine Dampfzuführung 23 gezeigt, die in die Abgasrezirkulationsleitung 8 mündet und aus mindestens einem Kesselwasserentspanner 24 gespeist wird. Die Figur zeigt voneinander unabhängige Kesselwasserentspanner 24 aller Druckteile 5, 6 und 7. Alternativ kann natürlich auch Dampf aus einem sog. cascading blowdown entnommen werden, bei dem Kesselwasserentspanner einer höheren Druckstufe ihr Abwasser in die Trommel der darunterliegenden Druckstufe abgeben.

## Patentansprüche

1. Kraftwerksanlage (1) mit einer Gasturbine (2) und mit einem der Gasturbine in Strömungsrichtung eines Abgases nachgeschalteten Abhitzedampferzeuger (3), wobei der Abhitzedampferzeuger (3) Heizflächen (4) eines Hochdruckteils (5), eines Mitteldruckteils (6) und eines Niederdruckteils (7) umfasst, wobei eine Abgasrezirkulationsleitung (8) in Strömungsrichtung eines Abgases stromab eines Verdampfers (9) des Hochdruckteils (5) vom Abhitzedampferzeuger (3) abzweigt und vor den Heizflächen (4) wieder in den Abhitzedampferzeuger (3) mündet, wobei ein Gebläse (11) in der Abgasrezirkulationsleitung (8) angeordnet ist, **dadurch gekennzeichnet, dass** in Strömungsrichtung eines rezirkulierten Abgases hinter dem Gebläse (11) eine Dampfzuführung (23) in die Abgasrezirkulationsleitung (8) mündet.

2. Kraftwerksanlage (1) nach Anspruch 1, wobei die Dampfzuführung (23) von einem Kesselwasserentspanner (24) abzweigt.

3. Kraftwerksanlage (1) nach Anspruch 1 oder Anspruch 2, umfassend eine Anströmhaube (10), über welche im Betrieb nachfolgenden Heizflächen (4) Abgas zugeführt wird, wobei die Abgasrezirkulationsleitung (8) in die Anströmhaube (10) mündet.

4. Kraftwerksanlage (1) nach einem der vorhergehenden Ansprüche, wobei eine Regelklappe (12) in der Abgasrezirkulationsleitung (8) angeordnet ist.

5. Kraftwerksanlage (1) nach einem der Ansprüche 3 oder 4, umfassend mindestens zwei Abgasrezirkulationsleitungen (8), die bezogen auf einen Umfang des Abhitzedampferzeugers (3) symmetrisch angeordnet in die Anströmhaube (10) münden.

6. Verfahren zum Betreiben einer Kraftwerksanlage (1) mit einer Gasturbine (2) und einem Abhitzedampferzeuger (3), wobei der Abhitzedampferzeuger (3) Heizflächen (4) eines Hochdruckteils (5), eines Mitteldruckteils (6) und eines Niederdruckteils (7) umfasst, wobei Gasturbinenabgase nach einem Verdampfer (9) des Hochdruckteils (5) abgezweigt und vor den Heizflächen (4) wieder in den Abhitzedampferzeuger (3) eingeleitet werden, **dadurch gekennzeichnet, dass** Dampf in das rezirkulierte Abgas gemischt wird.

7. Verfahren nach Anspruch 6, wobei der zugemischte Dampf zuvor einem Kesselwasserentspanner (24) entnommen wird.

8. Verfahren nach einem der Ansprüche 6 oder 7, wobei die Gasturbinenabgase nach einem Hochdruckvorwärmer (13) im Abhitzedampferzeuger (3) abgezweigt werden.

9. Verfahren nach einem der Ansprüche 6 bis 8, wobei zu rezirkulierende Gasturbinenabgase mittels eines Gebläses (11) erfasst und wieder in den Abhitzedampferzeuger (3) eingeleitet werden.

10. Verfahren nach einem der Ansprüche 6 bis 9, wobei eine rezirkulierte Abgasmenge über eine Regelklappe (12) eingestellt wird.

11. Verfahren nach einem der Ansprüche 6 bis 10, wobei rezirkuliertes Abgas an gegenüberliegenden Positionen dem Abhitzedampferzeuger (3) zugeführt wird.

12. Verfahren nach einem der Ansprüche 6 bis 11, wobei zumindest ein Teil eines heißen Gasturbinenabgases mittels einer Abgasweiche (25) vom Hauptmassenstrom des Abgases abgetrennt und dem Abhitzedampferzeuger (3) zugeführt wird und dort mit rezirkuliertem Abgas gemischt wird, so dass die Kraftwerksanlage (1) leistungsgeführt angefahren werden kann.

## Claims

1. Power plant (1) having a gas turbine (2) and having a heat recovery steam generator (3) connected downstream of the gas turbine in the direction of flow of an exhaust gas, wherein the heat recovery steam generator (3) comprises heating surfaces (4) of a high-pressure section (5), of a medium-pressure section (6) and of a low-pressure section (7), wherein an exhaust gas recirculation line (8) branches off from the heat recovery steam generator (3) downstream of an evaporator (9) of the high-pressure section (5) in the direction of flow of an exhaust gas and opens into the heat recovery steam generator (3) again upstream of the heating surfaces (4), wherein a blower (11) is arranged in the exhaust gas recirculation line (8), **characterized in that** a steam feed (23) opens into the exhaust gas recirculation line (8) downstream of the blower (11) in the direction of flow of a recirculated exhaust gas.

2. Power plant (1) according to Claim 1, wherein the steam feed (23) branches off from a boiler water expansion tank (24).

3. Power plant (1) according to Claim 1 or Claim 2, comprising an inflow hood (10), via which, during operation, exhaust gas is supplied to downstream heating surfaces (4), wherein the exhaust gas recirculation line (8) opens into the inflow hood (10).

4. Power plant (1) according to any one of the preceding claims, wherein a control damper (12) is arranged in the exhaust gas recirculation line (8).

5. Power plant (1) according to either of Claims 3 or 4, comprising at least two exhaust gas recirculation lines (8), which are arranged symmetrically with respect to a circumference of the heat recovery steam generator (3) and open into the inflow hood (10).

6. Method for operating a power plant (1) having a gas turbine (2) and a heat recovery steam generator (3), wherein the heat recovery steam generator (3) comprises heating surfaces (4) of a high-pressure section (5), of a medium-pressure section (6) and of a low-pressure section (7), wherein gas turbine exhaust gases are branched off downstream of an evaporator (9) of the high-pressure section (5) and are reintroduced into the heat recovery steam generator (3) upstream of the heating surfaces (4), **characterized in that** steam is mixed into the recirculated exhaust gas.

7. Method according to Claim 6, wherein the admixed steam is previously taken from a boiler water expansion tank (24).

8. Method according to either of Claims 6 or 7, wherein the gas turbine exhaust gases are branched off downstream of a high-pressure preheater (13) in the heat recovery steam generator (3).

9. Method according to any one of Claims 6 to 8, wherein gas turbine exhaust gases to be recirculated are captured by means of a blower (11) and reintroduced into the heat recovery steam generator (3).

10. Method according to any one of Claims 6 to 9, wherein a recirculated exhaust gas quantity is set by means of a control damper (12).

11. Method according to any one of Claims 6 to 10, wherein recirculated exhaust gas is supplied to the heat recovery steam generator (3) at opposite positions.

12. Method according to any one of Claims 6 to 11, wherein at least some of a hot gas turbine exhaust gas is separated from the main mass flow of the exhaust gas by means of an exhaust gas diverter (25) and is supplied to the heat recovery steam generator (3) and is mixed there with recirculated exhaust gas, thus enabling the power plant (1) to be started up with power control.

## Revendications

1. Centrale (1) électrique, comprenant une turbine (2) à gaz et un générateur (3) de vapeur à récupération de la chaleur perdue en aval de la turbine à gaz, dans le sens de passage des gaz d'échappement, le générateur (3) de vapeur à récupération de la chaleur perdue comprenant des surfaces (4) de chauffe d'une partie (5) de haute pression, d'une partie (6) de moyenne pression et d'une partie (7) de basse pression, dans laquelle un conduit (8) de recirculation des gaz d'échappement bifurque du générateur (3) de vapeur à récupération de la chaleur perdue en aval, dans le sens de passage des gaz d'échappement, d'un évaporateur (9) de la partie (5) de haute pression et redébouche dans le générateur (3) de vapeur à récupération de la chaleur perdue, avant les surfaces (4) de chauffe, dans laquelle une soufflante (11) est montée dans le conduit (8) de recirculation des gaz d'échappement, **caractérisée en ce que** derrière, dans le sens de passage des gaz d'échappement en recirculation, la soufflante (11), un apport (23) de vapeur débouche dans le conduit (8) de recirculation des gaz d'échappement.

2. Centrale (1) électrique suivant la revendication 1, dans laquelle l'apport (23) de vapeur bifurque d'un détendeur (24) d'eau de chaudière.

3. Centrale (1) électrique suivant la revendication 1 ou revendication 2, comprenant une hotte (10) d'afflux, par laquelle, en fonctionnement, des gaz d'échappement sont apportés à des surfaces (4) de chauffe suivantes, le conduit (8) de recirculation des gaz d'échappement débouchant dans la hotte (10) d'afflux.

4. Centrale (1) électrique suivant l'une des revendications précédentes, dans laquelle un volet (12) de réglage est monté dans le conduit (8) de recirculation des gaz d'échappement.

5. Centrale (1) électrique suivant l'une des revendications 3 ou 4, comprenant au moins deux conduits (8) de recirculation des gaz d'échappement, qui débouchent dans la hotte (10) d'afflux, en étant disposés symétriquement par rapport à un pourtour du générateur (3) de vapeur à récupération de la chaleur perdue.

6. Procédé pour faire fonctionner une centrale (1) électrique, comprenant une turbine (2) à gaz et un générateur (3) de vapeur à récupération de la chaleur perdue, le générateur (3) de vapeur à récupération de la chaleur perdue comprenant des surfaces (4) de chauffe d'une partie (5) de haute pression, d'une partie (6) de moyenne pression et d'une partie (7) de basse pression, dans lequel on dérive des gaz d'échappement de la turbine à gaz après un évaporateur (9) de la partie (5) de haute pression et on les retourne avant les surfaces (4) de chauffe au générateur (3) de vapeur à récupération de la chaleur perdue, **caractérisé en ce que** l'on mélange de la vapeur aux gaz d'échappement en recirculation.

7. Procédé suivant la revendication 6, dans lequel on prélève la vapeur à mélanger auparavant d'un détendeur (24) d'eau de chaudière.

8. Procédé suivant l'une des revendications 6 ou 7, dans lequel on dérive les gaz d'échappement de la turbine à gaz après un préchauffeur (13) de haute pression dans le générateur (3) de vapeur à récupération de la chaleur perdue.

9. Procédé suivant l'une des revendications 6 à 8, dans lequel on prend des gaz d'échappement de la turbine à gaz en recirculation au moyen d'une soufflante (11) et on les retourne au générateur (3) de vapeur à récupération de la chaleur perdue.

10. Procédé suivant l'une des revendications 6 à 9, dans lequel on règle une quantité des gaz d'échappement en recirculation par un volet (12) de réglage.

11. Procédé suivant l'une des revendications 6 à 10, dans lequel on apporte des gaz d'échappement en recirculation en des positions opposées au générateur (3) de vapeur à récupération de la chaleur perdue.

12. Procédé suivant l'une des revendications 6 à 11, dans lequel on sépare au moins une partie des gaz d'échappement chauds de la turbine à gaz du courant massique principal des gaz d'échappement, au moyen d'un séparateur (25) des gaz d'échappement et on les envoie au générateur (3) de vapeur à récupération de la chaleur perdue, et on les y mélange des gaz d'échappement en recirculation, de manière à pouvoir faire démarrer, d'une manière commandée en puissance, la centrale (1) électrique.
